# EUROPÄISCHE PATENTANMELDUNG

(11) **EP 1 293 384 A2**
(43) Veröffentlichungstag der Anmeldung: **19.03.2003**
(21) Anmeldenummer: 02018991.6
(22) Anmeldetag: 27.08.2002
(51) Int. Cl.: B60R 7/04

(54) **Ablagefach unterhalb des Himmels eines Kraftfahrzeuges sowie Verfahren zur Herstellung eines Ablagefaches**

(30) Priorität: 07.09.2001 DE 10144069
(71) Anmelder: ADAM OPEL AG, 65423 Rüsselsheim (DE)
(72) Erfinder: Eidt, Ralf, Dipl.-Ing., 55411 Bingen (DE); Warzelhan, Ronald, 55262 Heidesheim (DE)

(57) **Zusammenfassung**

Die Erfindung schlägt ein Ablagefach (5) zur Aufnahme von Gegenständen vor, wobei das Ablagefach unterhalb des Himmels eines Kraftfahrzeuges im Bereich der Frontscheibe des Fahrzeuges angeordnet ist. Hierbei erstreckt sich das Ablagefach über die gesamte Breite des Fahrzeuginnenraumes im Dachbereich des Kraftfahrzeuges.

Die Erfindung betrifft ferner die Herstellung eines Ablagefaches zur Verwendung in einem Kraftfahrzeug. Das Ablagefach besteht aus Polypropylen und Naturfasern, wie Flachs oder Jute, wobei es durch Blastechnik geformt und verpresst wird.

Ein solches Ablagefach kann groß dimensioniert werden und zeichnet sich hierbei durch eine hohe Steifigkeit aus. Es ist geeignet, zusätzliche Belastungen durch die Lagerung benachbarter Verkleidungselemente des Fahrzeuginnenraums aufzunehmen.

## Beschreibung

Die Erfindung betrifft ein Ablagefach zur Aufnahme von Gegenständen, wobei das Ablagefach unterhalb des Himmels eines Kraftfahrzeuges, insbesondere Personenkraftwagens, im Bereich der Frontscheibe des Fahrzeuges angeordnet ist. Sie betrifft ferner ein Verfahren zur Herstellung eines Ablagefaches.

Bei Kraftfahrzeugen, insbesondere Personenkraftwagen, finden Ablagefächer Verwendung, die gewöhnlich aus Kunststoff bestehen. Diese Ablagefächer weisen ein relativ hohes spezifisches Gewicht auf, so dass sie nur relativ klein und demnach nicht geeignet sind, größere und insbesondere relativ schwere Gegenstände aufzunehmen. Abgesehen hiervon sind derartige Ablagefächer in ihrer Herstellung relativ kostenintensiv, zeichnen sich bei einem Unfall und bei niedrigen Temperaturen durch ein ungünstiges Splitterverhalten aus sind problematisch bei der Auswahl des Dekormaterials. In beladenem Zustand ist bei solchen Ablagefächern oftmals ein Klappergeräusch zu vernehmen, das beim Fahren als störend empfunden wird.

Aus der EP 0 411 581 B1 ist eine Überkopf-Mittelkonsole für Kraftfahrzeuge bekannt, die ein Fach zum Aufbewahren von Gegenständen aufweist. Dieses Fach ist an dem oberen Windschutzscheibenrahmen von unten her angebracht. Es erstreckt sich somit nur über einen zentralen Bereich des Kraftfahrzeuges, nämlich im Bereich der Mitte der Windschutzscheibe. Es ist nicht geeignet, größere Gegenstände aufzunehmen.

In der DE 41 16 758 C2 ist ein Stauraum zur Aufnahme von Gegenständen im Dachbereich eines Kraftfahrzeuges beschrieben. Er ist nur zur Aufnahme von Kleinteilen vorgesehen und befindet sich im Bereich hinter den parallel zum Fahrzeugdach liegenden flächigen Sonnenblenden oder in einem Bereich zwischen den Sonnenblenden.

Aus der US 6 126 221 ist ein verschließbarer Überkopf-Stauraum bekannt, der eine solche Dimension aufweist, dass er der Aufnahme eines elektrischen Schaltgerätes zum Ansteuern eines über Fernbedienung zu öffnenden bzw. schließenden Garagentores dient.

Dachmodule für die A-Säule bzw. B-Säule eines Kraftfahrzeuges sind in der EP 993 991 A1 und EP 0 993 992 A1 beschrieben.

Aufgabe der Erfindung ist es, ein groß dimensioniertes Ablagefach zu schaffen, das sich durch eine hohe Steifigkeit auszeichnet. Es soll geeignet sein, ggf. zusätzliche Belastungen durch die Lagerung benachbarter Verkleidungselemente des Fahrzeuginnenraums aufzunehmen. Aufgabe ist ferner, ein Herstellungsverfahren für ein Ablagefach anzugeben.

Die Erfindung schlägt ein Ablagefach zur Aufnahme von Gegenständen, wobei das Ablagefach unterhalb des Himmels eines Kraftfahrzeuges, insbesondere Personenkraftfahrzeuges, im Bereich der Frontscheibe des Fahrzeuges angeordnet ist, vor, wobei sich das Ablagefach über die gesamte Breite des Fahrzeuginnenraumes, bezogen auf den Dachbereich des Kraftfahrzeuges, erstreckt.

Dem Fahrer und dem Beifahrer steht somit ein recht großes Volumen zwischen dem Ablagefach und dem Himmel des Fahrzeuginnenraumes zur Aufnahme relativ großer Gegenstände zur Verfügung. In dem Ablagefach können beispielsweise DIN A4 Aktenordner, Tennisschläger usw. untergebracht werden. Unter diesem Aspekt ist vorgesehen, dass die Tiefe des Ablagefachs, somit in Fahrzeuglängsrichtung gesehen, 200 bis 500 mm, vorzugsweise 460 mm beträgt. Die Beladehöhe über dem Ablagefach sollte 80 bis 150 mm betragen.

Damit die vom Ablagefach aufgenommenen Gegenstände über die gesamte Breite des Fahrzeuges vom Fahrer bzw. Beifahrer gehandhabt werden können, sollte sich das Ablagefach frei über die gesamte Breite des Fahrzeuginnenraumes erstrecken. In diesem Fall sind keine Stützen oder Streben zum Verbinden des Himmels mit dem Ablagefach vorgesehen. Die Verbindung des Ablagefachs mit der Karosserie erfolgt ausschließlich in den seitlichen Bereichen des Ablagefaches und/oder dem vorderen Bereich des Ablagefaches, somit dem seitlichen Dachrahmen bzw. dem Rahmenteil im Bereich der Windschutzscheibe. Hierzu weist das Ablagefach beispielsweise in seinem vorderen Bereich und/oder seinen seitlichen Bereichen Löcher zur Aufnahme von Befestigungsmitteln, insbesondere Schrauben auf, die der Befestigung des Ablagefachs an der Karosserie dienen. Es wird als besonders vorteilhaft angesehen, wenn die Befestigungsmittel gleichzeitig der Befestigung eines Halters für eine Sonnenblende und/oder eines Befestigungsrahmens für ein Leuchtmodul zwecks Beleuchtung des Fahrzeuginnenraums dienen. Um die Montage der Sonnenblende bzw. des Befestigungsrahmens für das Leuchtmodul zu vereinfachen, sollten im Ablagefach Profilausnehmungen und/oder Profilvertiefungen zum Positionieren des Halters für die Sonnenblende bzw. des Befestigungsrahmens für das Leuchtmodul vorgesehen sein.

Eine recht hohe Steifigkeit des Ablagefaches, die es ermöglicht, das Ablagefach frei hängend über die gesamte Breite des Fahrzeuginnenraums zu positionieren, wird insbesondere dadurch erreicht, dass es aus einer besonderen Materialkombination und in einem besonderen Verfahren hergestellt ist. So sieht eine bevorzugte Ausführungsform vor, dass das Ablagefach aus Polypropylen (PP) und Naturfasern, wie Flachs oder Jute, besteht. Insbesondere bei solchen Materialkombinationen ist es von Vorteil, wenn das Ablagefach durch miteinander verpresste Schalen gebildet ist. Um eine ausreichende Steifigkeit des Ablagefaches im Bereich der hinteren, freien Kante zu erzielen, wird vorgeschlagen, in das Ablagefach in diesem Bereich einen Querträger, der insbesondere aus Holz besteht, einzubetten. Das erfindungsgemäße Ablagefach ermöglicht aufgrund der beschriebenen Materialkombination und Herstellungstechnik niedrige Produktionskosten und niedrige Werkzeugkosten. Das Ablagefach zeichnet sich durch ein relativ geringes Gewicht aus. Das Splitterverhalten ist ohne Bedeutung, insbesondere bei sehr tiefen Temperaturen, beispielsweise -30 °C. Die Materialzusammensetzung gestattet auf der Ober- und Unterseite eine freie Dekorauswahl, beispielsweise kann das äußere bzw. der direkte Sichtbereich des Ablagefachs mit einem Bezugstoff (Vlies, Stoff, Leder usw.) bezogen sein. Das Geräuschverhalten, insbesondere unter dem Aspekt des Klapperns bei Beladung, ist bei dem Ablagefach sehr günstig. Das Ablagefach lässt sich mit gleich guter Qualität reproduzieren. Da es sich um die Materialkombination PP mit Naturfasern (Flachs oder Jute) handelt, ist kein erhebliches Schrumpfen beim Herstellen zu verzeichnen.

Hergestellt wird dieses aus PP und Naturfaser bestehende Ablagefach insbesondere mittels Formen durch Blastechnik und Verpressen. Hierbei wird das Ablagefach vorzugsweise doppelwandig mit Hohlräumen ausgeführt. Es werden zwei Schalenteile, insbesondere durch Plattenmaterial oder Rollenware gebildet, nebeneinander in eine Heizplatte gelegt, erhitzt, im Formwerkzeug mittels Blastechnik geformt und danach miteinander verpresst.

Das bezüglich Aufbau und Herstellung vorbeschriebene Ablagefach ist gemäß einer besonderen Ausführungsform der Erfindung mit einer seitlichen Verkleidung des Dachrahmens des Fahrzeuges verbunden, wobei in diese Verkleidung ein weiteres Ablagefach integriert ist. Dieses seitliche Ablagefach, wobei durchaus auf beiden Seiten des Fahrzeuges ein Ablagefach vorgesehen ist, dient der Aufnahme eines kleineren Gegenstandes, beispielsweise eines Handys oder einer Sonnenbrille. Damit weist die Verkleidung einen Mehrfachnutzen auf. Der Ablagekomfort wird erhöht.

Auf besonders einfache Art und Weise lässt sich zwischen dem großen, querverlaufenden Ablagefach und der das seitliche Ablagefach aufnehmenden Verkleidung eine Verbindung herstellen, wenn die Verkleidung in das frontseitige Ablagefach einhängbar ist, insbesondere im Bereich der Ladekante des frontseitigen Ablagefachs. Um Längentoleranzen ausgleichen zu können, sollte die Verkleidung in Abstand zur Einhängstelle eine oder mehrere Clips-Verbindungen mit der Karosserie im Bereich der B-Säule aufweisen, die die Verkleidung in Längsrichtung des Fahrzeuges verschiebbar halten. Die Verkleidung wird durch Befestigungsmittel, insbesondere eine Schraube, an der Karosserie befestigt. Zusätzlich sollten die Verkleidung des Dachrahmens und eine Verkleidung B-Säule korrespondierende planare Flächen zum Längsverschieben der Verkleidung des Dachrahmens aufweisen.

Das erfindungsgemäße Ablagefach, insbesondere in Kombination mit den weiteren seitlichen Ablagefächern findet insbesondere Verwendung bei einem Multifunktionsfahrzeug für Personen und Gepäck.

Weitere Merkmale der Erfindung sind in den Unteransprüchen, der Beschreibung der Figuren sowie den Figuren selbst dargestellt.

In den Figuren ist die Erfindung anhand eines Ausführungsbeispieles dargestellt, ohne hierauf beschränkt zu sein. Es zeigt:
- Figur 1: eine räumliche Ansicht der verkleideten Rahmenteile eines Personenkraftwagens im Bereich der A- und B-Säule sowie des dort befindlichen Dachrahmens, einschließlich des im Frontbereich befindlichen Ablagefaches zur Aufnahme von Gegenständen und des seitlichen Ablagefaches, veranschaulicht für die, bezogen auf die Fahrtrichtung, rechte Seite des Fahrzeuges,
- Figur 2: eine entsprechende Darstellung der zur Figur 1 genannten Teile, für den linken Bereich des Fahrzeuges, aus einer dachnäheren Position gesehen,
- Figur 3: eine räumliche Ansicht des Ablagefaches zur Aufnahme von Gegenständen, schräg von oben gesehen,
- Figur 4: das Ablagefach gemäß der Darstellung in Figur 3, aus einer anderen Perspektive, von oben gesehen,
- Figur 5: das in den Figuren 3 und 4 gezeigte Ablagefach, von unten gesehen,
- Figur 6: eine räumliche Ansicht der auf der linken Seite des Fahrzeuges montierten Verkleidung mit Ablagefach, mit einem mit dieser verbundenen und weiter hinten im Fahrzeug angeordneten weiteren Ablagefach, das mit einem Netz versehen,
- Figur 7: das vordere, seitliche Verkleidung, in einer räumlichen Darstellung veranschaulicht, gesehen aus einer Position schräg von unten,
- Figur 8: eine Rückansicht der in Figur 7 gezeigten Verkleidung und
- Figur 9: eine räumliche Ansicht des mit der seitlichen Verkleidung gemäß der Darstellung in Figur 7 verbindbaren B-Säulenverkleidung.

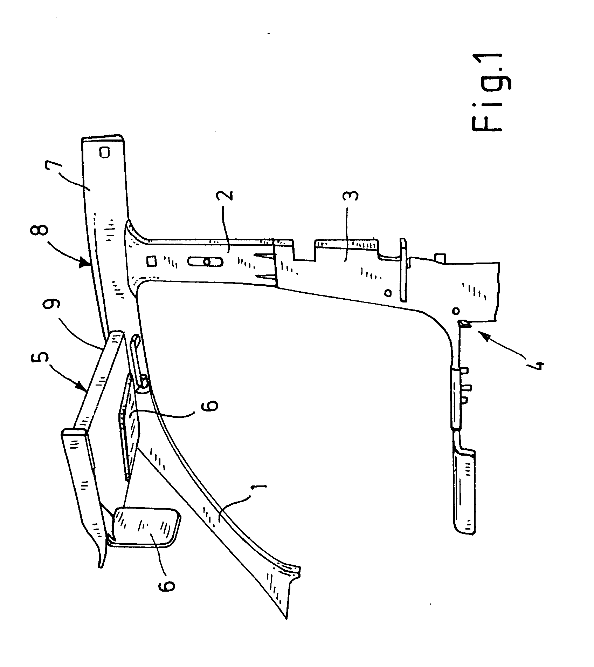

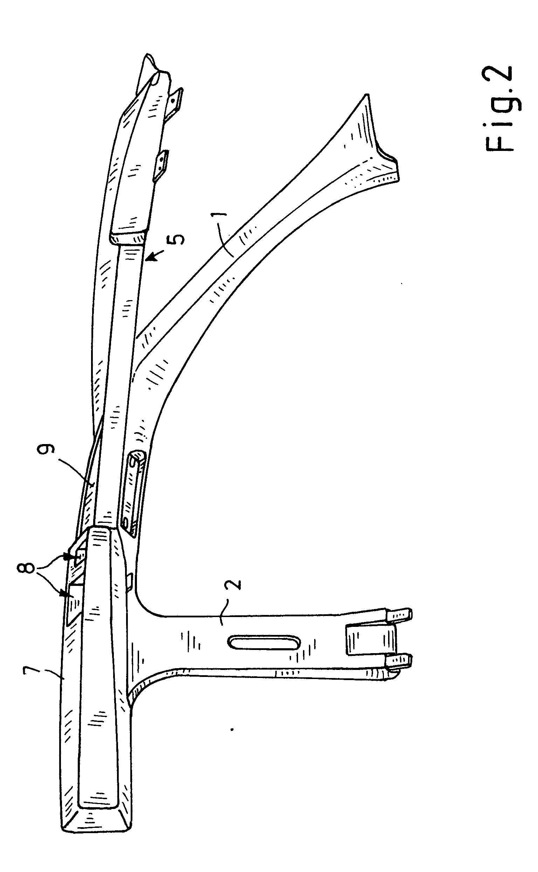

In den Figuren 1 und 2 ist der grundsätzliche Aufbau des Personenkraftwagens im Bereich dessen A- und B-Säule sowie des Dachrahmens, bezogen auf deren Verkleidungen und Ablagefächer veranschaulicht. Gezeigt ist eine A-Säulenverkleidung 1 und eine obere B-Säulenverkleidung 2, in der Figur 1 zusätzlich eine untere B-Säulenverkleidung 3 und eine Verkleidung 4 des unteren Türöffnungsausschnitts der vorderen Tür. Zwischen der rechten und linken A-Säulenverkleidung 1 ist das erfindungsgemäße Ablagefach 5 zur Aufnahme von Gegenständen angeordnet. Es befindet sich unterhalb des Himmels des Personenkraftwagens, im Bereich der Frontscheibe. Das Ablagefach 5 erstreckt sich über die gesamte Breite des Fahrzeuginnenraumes, bezogen auf die Breite des Dachbereiches. Im Ablagefach 5 sind zwei Sonnenblenden 6 gelagert, ferner dient das Ablagefach 5 der Aufnahme eines Befestigungsrahmens für ein Leuchtmodul. Mit diesem kann der vordere Bereich des Fahrzeuginnenraumes beleuchtet werden.

Mit dem Ablagefach 5 ist auf jeder Seite des Fahrzeuges eine Verkleidung 7 des Dachrahmens des Fahrzeuges verbunden, in die ein oben offenes Ablagefach 8 integriert ist. Die jeweilige Verkleidung 7 ist in das frontseitige Ablagefach 5 mittels der Haken 22 einhängbar, konkret im Bereich der Ladekante 9 des Ablagefachs 5, und an der Unterseite im Bereich des Vorsprunges 27 der Verkleidung 7 überlappend integriert. Die jeweilige Verkleidung 7 ist mit der oberen Verkleidung 2 der B-Säule verbunden.

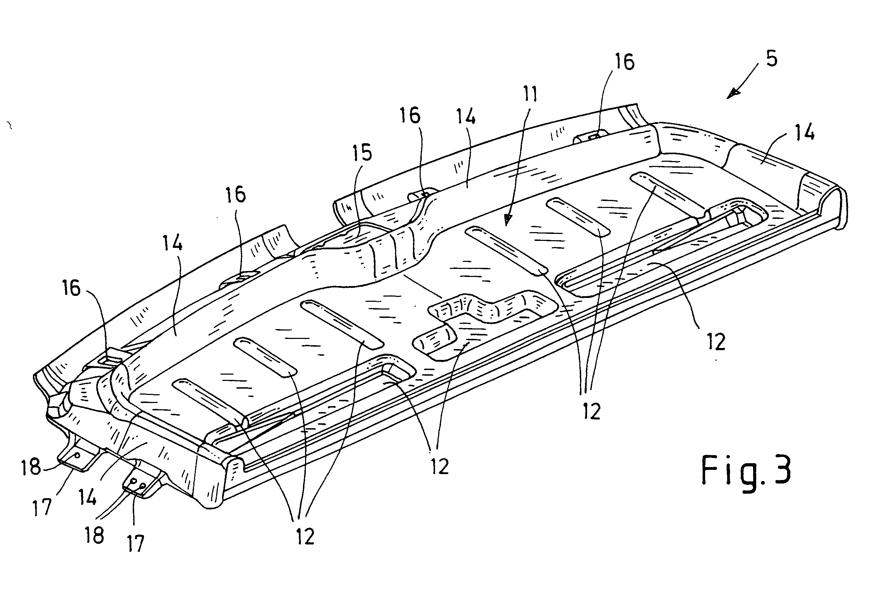

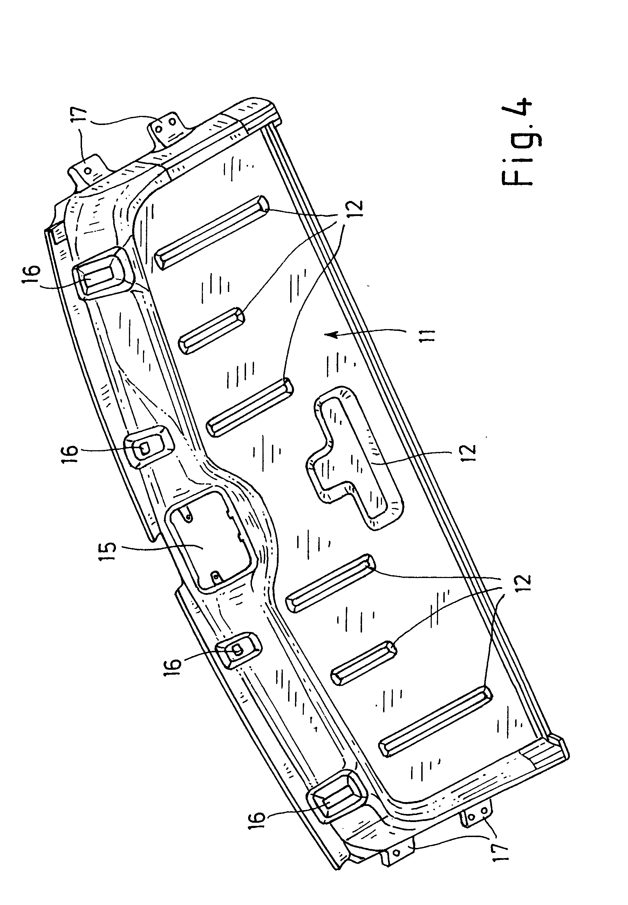

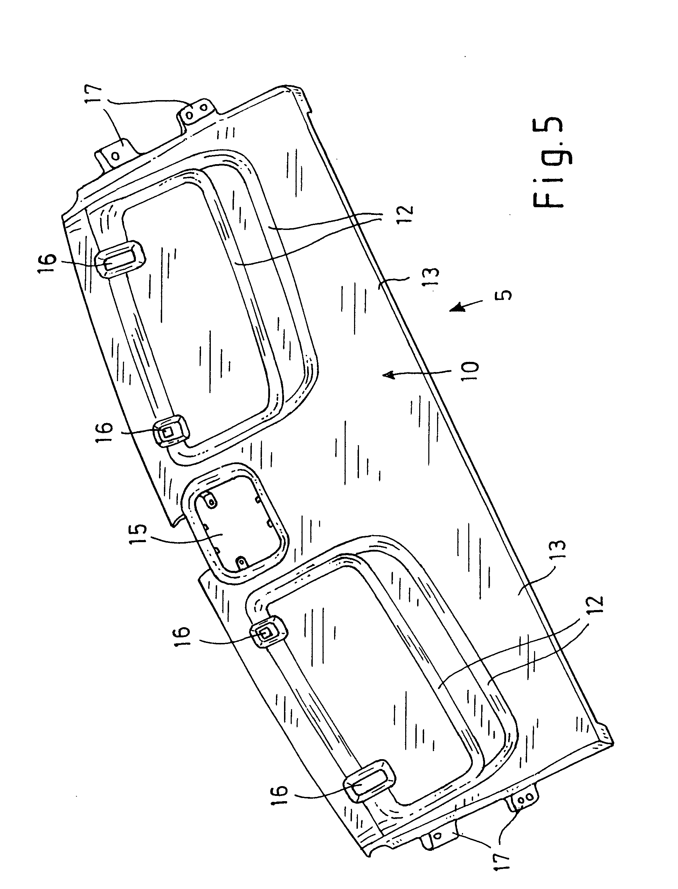

Details betreffend das Ablagefach 5 sind in den Figuren 3 bis 5 veranschaulicht:

Das Ablagefach 5 ist zweischalig ausgebildet. Das untere Schalenteil, das in der Einbaulage des Ablagefaches 5 dem Himmel des Fahrzeuges abgewandt ist, ist mit der Bezugsziffer 10, das obere Schalenteil mit der Bezugsziffer 11 bezeichnet. Als Ausgangsmaterial für das Ablagefach 5 wird Plattenware von ca. 10 mm Dicke benutzt, die zum Beispiel 50 % PP und etwa 50 % Flachs enthält. Auf der Außenseite ist die Platte mit Nadelfilz oder anderen Materialien, wie Vlies, Stoff, Leder, Dekormaterial, als Bezugstoff beschichtet und auf der Innenseite ist eine Folie oder ein anderes Abdichtmaterial vorgesehen, welches die Platte abdichtet und ein Ausströmen der eintretenden Luft während des Blasvorgangs verhindert. Bei der Herstellung des Ablagefaches 5 werden zunächst die beiden Platten nebeneinander gelegt und in einer Heizpresse vorkomprimiert und erhitzt, beispielsweise bei 200 °C. Danach wird eine Platte in ein Blasform-Werkzeug gelegt, so dass die Folie oben angeordnet ist. Dann werden Metalldüsen eingeklappt, ein hinterer, der Versteifung des Ablagefaches 5 dienender Querträger, zum Beispiel ein Querträger aus Holz, eingelegt und die obere Platte daraufgelegt, so dass die Folienseiten der unteren und der oberen Platten zueinander gekehrt sind. Danach wird Luft eingeblasen und dadurch das Ablagefach 5 im Formwerkzeug geformt. Gleichzeitig werden die Platten am umlaufenden Rand und an mehreren definierten Zonen durch Verpressung verschweißt. Die verpressten Zonen 12 der beiden Schalenteile 10 und 11 und der im Bereich 13 sich über die gesamte Breite des Ablagefachs 5 erstreckende Querträger am hinteren Rand dienen der Versteifung des Ablagefaches 5. Die verpressten Zonen 12 erhöhen die Steifigkeit und verhindern dabei eine horizontale Verschiebung der Schalenteile 10 und 11 zueinander. Die profilierten Ränder 14 dienen auch zur Eingrenzung des Fachvolumens. Der Querträger, der aus Holz besteht, gewährleistet, dass sich das Ablagefach 4 in der Mitte nur auf ein bestimmtes Maß durchbiegt. Es ist deshalb auch nicht erforderlich, eine mittige Lagerung des Ablagefachs 5 im Bereich deren hinteren Randes zum Himmel des Fahrzeuges vorzusehen.

Die beiden Schalenteile 10 und 11 sind mit diversen Profilausnehmungen zur Aufnahme von Funktionselementen versehen. Eine zentrale, vordere Profilausnehmung 15 dient der Aufnahme eines Befestigungsrahmens für das Leuchtmodul. Vier weitere Profilausnehmungen 16 dienen der Aufnahme von Haltern für die beiden Sonnenblenden. Jeweils eine der Ausnehmungen 16 pro Sonnenblende ist größer ausgebildet, da sie das eigentliche Lager für die Sonnenblende aufnimmt, während die andere Ausnehmung 16 nur das Lagerteil zum Positionieren der Sonnenblende in ihrer nicht seitlich verschwenkten Stellung aufzunehmen hat. Dieses Lager ist aufgrund der Steifigkeit des Ablagefaches im Ablagefach und nicht an der Karosserie befestigt. Dadurch entfällt die Über-Kopf-Montage.

Das Ablagefach 5 weist schließlich auf seinen beiden Seiten Ansätze 17 auf, die mit Löchern 18 versehen sind, durch die Schrauben eingeführt werden können, die der Verbindung des Ablagefaches 5 mit der Karosserie dienen. Das Ablagefach kann daher mit Klipsen in Vormontageposition gehalten werden.

Das Ablagefach 5 weist eine Tiefe von 200 bis 500 mm, vorzugsweise 460 mm auf und es beträgt der Abstand des montierten Ablagefaches 5 zum Himmel des Fahrzeuges etwa 80 bis 150 mm.

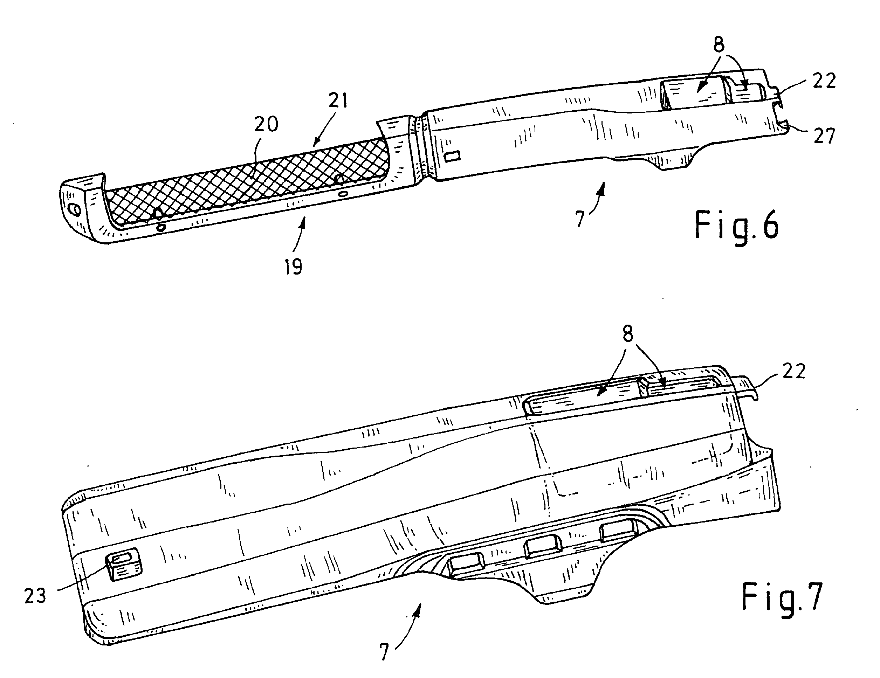

In den Figuren 6 bis 9 ist die Gestaltung der linken seitlichen Verkleidung 7 mit integriertem Ablagefach 8 sowie die Verbindung der Verkleidung 7 mit den benachbarten Bauteilen veranschaulicht. Für die rechte Verkleidung 7 gilt Entsprechendes, allerdings unter dem Aspekt der gespiegelten Gestaltung und Anordnung.

Der Darstellung der Figur 6 ist zu entnehmen, dass mit der Verkleidung 7 eine weitere, nach hinten anschließende Verkleidung 19 des Dachrahmens zusammenwirkt, die mit einem seitlichen Netz 20 versehen ist, so dass sich diese Verkleidung 19 als weiteres Ablagefach 21 darstellt.

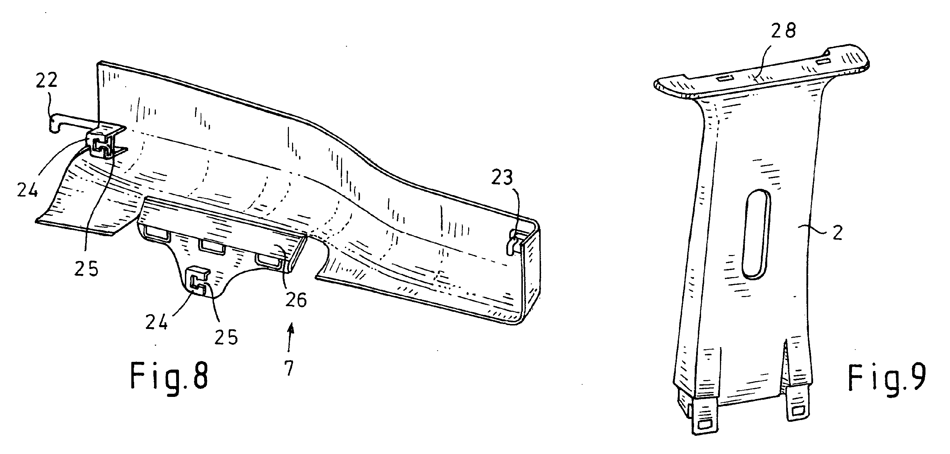

Den Figuren 6 bis 8 ist zu entnehmen, dass die seitliche Verkleidung 7, die das Ablagefach 8 aufweist, in dem dem Ablagefach 5 zugewandten Stirnbereich mit einer Einhängenase 22 versehen ist, die von oben hinter die Ladekante 9 des Ablagefaches 5 einhängbar ist. Die Verkleidung 7 weist in ihrem hinteren Bereich eine Ausnehmung 23 auf, durch die eine Schraube zum Befestigen der Verkleidung 7 an der Karosserie gesteckt werden kann. Im vorderen Abschnitt der Verkleidung 7 ist eine Aufnahme 24 für eine Clipsverbindung vorgesehen, die gleichfalls der Verbindung der Verkleidung 7 mit der Karosserie dient, allerdings eine geringfügige Relativbewegung dieser Teile in Längsrichtung des Fahrzeuges gestattet. Insofern ist die Aufnahme 24 mit einer Nut 25 versehen. Die Verkleidung 7 besitzt an ihrer Unterseite eine planare Schiebefläche 26, um auftretende Toleranzen zur Verkleidung 2 der B-Säule oben auszugleichen. In der Figur 9 ist die mit der planaren Schiebefläche 26 der Verkleidung 7 zusammenwirkende planare Schiebefläche der B-Säulenverkleidung 2 mit der Bezugsziffer 28 bezeichnet. Im Verbindungsbereich von Verkleidung 7 und B-Säulenverkleidung 2 ist die Verkleidung 7 mit einer entsprechenden Aufnahme 24 mit Nut 25 versehen, und es durchsetzt eine Clipsverbindung die Verkleidung 7 und die B-Säulenverkleidung 2.

### Bezugszeichenliste

- Verkleidung A-Säule: 1
- Obere Verkleidung B-Säule: 2
- untere Verkleidung B-Säule: 3
- Verkleidung: 4
- Ablagefach: 5
- Sonnenblende: 6
- Verkleidung: 7
- Ablagefach: 8
- Ladekante: 9
- unteres Schalenteil: 10
- oberes Schalenteil: 11
- verpresste Zone: 12
- Bereich: 13
- Rand: 14
- Profilausnehmung: 15
- Profilausnehmung: 16
- Ansatz: 17
- Loch: 18
- hintere Verkleidung: 19
- Netz: 20
- Ablagefach: 21
- Einhängenase: 22
- Ausnehmung: 23
- Aufnahme: 24
- Nut: 25
- planare Schiebefläche: 26
- Vorsprung: 27
- planare Schiebefläche: 28

## Patentansprüche

1. Ablagefach (5) zur Aufnahme von Gegenständen, wobei das Ablagefach (5) unterhalb des Himmels eines Kraftfahrzeuges, insbesondere eines Personenkraftwagens, im Bereich der Frontscheibe des Fahrzeuges angeordnet ist, **dadurch gekennzeichnet, dass** sich das Ablagefach (5) über die gesamte Breite des Fahrzeuginnenraums erstreckt.

2. Ablagefach nach Anspruch 1, **dadurch gekennzeichnet, dass** es sich vertikal nicht abgestützt über die gesamte Breite des Fahrzeuginnenraumes erstreckt.

3. Ablagefach nach Anspruch 1 oder 2, **dadurch gekennzeichnet, dass** die Tiefe des Ablagefaches (5) 200 bis 500 mm, vorzugsweise 460 mm beträgt.

4. Ablagefach nach einem der Ansprüche 1 bis 3, **dadurch gekennzeichnet, dass** es in einem Abstand vom Himmel des Fahrzeugs von 80 bis 150 mm angeordnet ist.

5. Ablagefach nach einem der Ansprüche 1 bis 4, **dadurch gekennzeichnet, dass** es in seinem vorderen Bereich und/oder seinen seitlichen Bereichen Löcher (15, 16, 17) zur Aufnahme von Befestigungsmitteln, insbesondere Schrauben aufweist, die der Befestigung des Ablagefaches (5) an der Karosserie dienen.

6. Ablagefach nach Anspruch 5, **dadurch gekennzeichnet, dass** die Befestigungsmittel gleichzeitig der Befestigung eines Halters für eine Sonnenblende und/oder eines Befestigungsrahmens für ein Leuchtmodul dienen.

7. Ablagefach nach Anspruch 6, **dadurch gekennzeichnet, dass** es Profilausnehmungen (15, 16) und/oder Profilvertiefungen zum Positionieren des Halters für die Sonnenblende und/oder des Befestigungsrahmens für das Leuchtmodul aufweist.

8. Ablagefach nach einem der Ansprüche 1 bis 7, **dadurch gekennzeichnet, dass** es aus Polypropylen und Naturfasern, wie Flachs, Jute usw., besteht.

9. Ablagefach nach einem der Ansprüche 1 bis 8, **dadurch gekennzeichnet, dass** es durch miteinander verpresste Schalenteile (10, 11) gebildet ist.

10. Ablagefach nach einem der Ansprüche 1 bis 9, **dadurch gekennzeichnet, dass** in das Ablagefach (5) in seinem hinteren Bereich ein Querträger, der insbesondere aus Holz besteht, eingebettet ist.

11. Ablagefach nach einem der Ansprüche 1 bis 10, **dadurch gekennzeichnet, dass** mit diesem eine seitliche Verkleidung (7) des Dachrahmens des Fahrzeuges verbunden ist, wobei in die Verkleidung (7) ein oben offenes Ablagefach (8) integriert ist.

12. Ablagefach nach Anspruch 11, **dadurch gekennzeichnet, dass** die Verkleidung (7) in das frontseitige Ablagefach (5) einhängbar ist, insbesondere im Bereich der Ladekante (9) des frontseitigen Ablagefachs (5).

13. Ablagefach nach Anspruch 12, **dadurch gekennzeichnet, dass** die Verkleidung (7) in Abstand zur Einhängstelle eine Clipsverbindung mit der Karosserie im Bereich der B-Säule aufweist, wobei die Clipverbindung die Verkleidung (7) in Längsrichtung des Fahrzeuges verschiebbar hält.

14. Ablagefach nach einem der Ansprüche 11 bis 13, **dadurch gekennzeichnet, dass** die Verkleidung (7) durch Befestigungsmittel, insbesondere Schrauben, an der Karosserie befestigt ist.

15. Ablagefach nach einem der Ansprüche 11 bis 14, **dadurch gekennzeichnet, dass** die seitliche Verkleidung (7) und eine Verkleidung (2) der B-Säule korrespondierende planare Flächen (26, 28) zum Längsverschieben der Verkleidung (7) des Dachrahmens relativ zur Verkleidung (2) der B-Säule aufweist.

16. Verfahren zur Herstellung eines Ablagefaches zur Verwendung in einem Kraftfahrzeug, insbesondere in einem Personenkraftwagen, zwecks Aufnahme von Gegenständen, **dadurch gekennzeichnet, dass** das Ablagefach aus Polypropylen und Naturfasern besteht, wobei es durch Blastechnik im Formwerkzeug geformt und verpresst wird.

17. Verfahren nach Anspruch 16, **dadurch gekennzeichnet, dass** das Ablagefach aus 50 % Polypropylen und 50 % Naturfaser besteht.

18. Verfahren nach Anspruch 16 oder 17, **dadurch gekennzeichnet, dass** das Ablagefach doppelwandig mit Hohlräumen ausgeführt wird.

19. Verfahren nach einem der Ansprüche 16 bis 18, **dadurch gekennzeichnet, dass** zwei Schalenteile, insbesondere durch Plattenmaterial oder Rollenware gebildet, nebeneinander in eine Heizplatte gelegt, erhitzt, mittels Blastechnik in einem Formwerkzeug geformt und danach miteinander verpresst werden.
